# EUROPÄISCHE PATENTSCHRIFT

(11) **EP 2 516 069 B1**
(45) Veröffentlichungstag und Bekanntmachung des Hinweises auf die Patenterteilung: **10.12.2014**
(21) Anmeldenummer: 10814735.6
(22) Anmeldetag: 23.12.2010
(51) Int. Cl.: B05D 1/28, B05C 1/08, C09J 7/02, B05D 5/06, B05D 7/04, B41M 1/10, B41M 3/00

(54) **VORRICHTUNG UND VERFAHREN ZUM AUFTRAGEN EINES KLEBERS AUF EINE BANDENFÖRMIGE KUNSTSTOFFFOLIE**
APPARATUS AND PROCESS FOR APPLYING AN ADHESIVE TO A BAND-SHAPED PLASTIC FILM
DISPOSITIF ET PROCÉDÉ D'APPLICATION D'UN ADHÉSIF SUR UNE FEUILLE DE PLASTIQUE EN FORME DE BANDE

(30) Priorität: 23.12.2009 AT 20342009
(43) Veröffentlichungstag der Anmeldung: 31.10.2012
(73) Patentinhaber: Tannpapier GmbH, 4050 Traun (AT)
(72) Erfinder: HULLMANN, Dirk, 21031 Hamburg (DE); STARKE, Daniel, 20537 Hamburg (DE); JESKE, Dieter, 21465 Wentorf (DE)
(74) Vertreter: Burger, Hannes
(86) Internationale Anmeldenummer: PCT/AT2010/000492
(87) Internationale Veröffentlichungsnummer: WO 2011/079340

(56) Entgegenhaltungen:
- EP-A2- 0 730 914
- WO-A1-2010/044201
- WO-A2-2010/037139
- FR-A1- 2 873 382
- US-A- 4 249 547
- US-A- 5 858 093

## Beschreibung

Die Erfindung betrifft ein Verfahren zum Auftragen eines Klebers auf einem Substrat mittels eines Tiefdruckverfahrens, wobei der Kleber unter Verwendung zweier rotierender Walzen, von welchen eine als Druckformzylinder und eine als Presseur ausgebildet ist, nur in vordefinierten Bereichen auf das Substrat aufgetragen wird, wobei sich der Druckformzylinder und der Presseur in einer Transportrichtung des Substrates mitdrehen.

Weiters betrifft die Erfindung eine Vorrichtung zum Auftragen eines Klebers auf ein Substrat mittels eines Tiefdruckverfahrens, wobei die Vorrichtung einen Druckformzylinder und einen Presseur aufweist, wobei der Druckformzylinder und der Presseur als in einer Transportrichtung des Substrates mitdrehend angetriebene Walzen ausgebildet sind

Ein Verfahren bzw. eine Vorrichtung der eingangs genannten Art sind aus der WO2007/085708 bekannt geworden. Die bekannte Lösung weist einen Druckformzylinder auf, in dem längliche oder punktförmige Vertiefungen zur Aufnahme des Klebers angeordnet sind. Ein ähnliche Lösung ist auch aus der WO 2008/027816 bekannt geworden.

Die DE 2535897 A1 bezieht sich auf ein Verfahren und eine Vorrichtung zur Herstellung von Klebe-Etiketten, bei welchen ein Kleberauftrag auf eine Etikettenrückseite mittels einer Gravurrolle erfolgt.

Die EP 0149135 B1 beschreibt ein wiederablösbares haftklebriges Flächengebilde mit annähernd kalottenförmigen Haftstellen. Das zur Herstellung des Flächengebildes verwendete Verfahren kann ein Tiefdruck- oder Siebdruckverfahren sein

Aus der DE 197 24 648 ist ein Verfahren bekannt geworden, bei welchem ein Haftkleber rasterförmig auf ein Substrat, wie eine Papierbahn oder eine mit Silikon beschichtete Papierbahn, etc., mittels eines Sieb-, Flexo- oder Tiefdruckverfahrens aufgebracht wird.

Die US 4249,547 betrifft eine Vorrichtung zum Auftragen eines Klebers auf ein Wrapping-Material für eine Zigarette. Bei der bekannten Vorrichtung wird ein gravierter Druckformzylinder verwendet, welcher mit einem Oberflächenabschnitt in einen Kleber enthaltenden Behälter 38 eintaucht. Der Druckformzylinder weist Bereiche für zwei unterschiedliche Kleberaufträge auf. In Umfangsrichtung verlaufende Bereiche für einen ersten Kleberauftrag bestehen aus tief gravierten Flächen mit einer schmalen Streifenbreite. Der Bereich für den zweiten Kleberauftrag weist eine weniger tief gravierte Fläche als die Bereiche für den ersten Kleberauflrag. Ferner steht der Druckformzylinder mit einer Applikationsrolle in Kontakt und überträgt den Kleber auf diese. Von der Applikationsrolle wird der Kleber auf das Wrapping-Material übertragen.

Die EP 0 730 914 betrifft eine Vorrichtung zum Auftragen eines Klebers auf einen Stoff. Bei dem bekannten Verfahren erfolgt der Kleberauftrag mittels eines Druckformzylinders, welcher Näpfchen aufweist, und eines Presseurs.

Das Dokument US 5,858,093 hat ein Verfahren zum Auftragen von Flüssigkeiten auf ein Papier mittels eines Zylinders mit einer strukturierten Oberfläche zum Gegenstand. Zur Aufnahme der Flüssigkeit tauchen Bereiche des Zylinders in einen die Flüssigkeit enthaltenden Behälter ein. Dem Zylinde gegenüberliegend und von diesem beabstandet ist eine als carrying roller bezeichnete Walze angeordnet. Zwischen dem Zylinder und der Walze ist das Papier durchgeführt.

Die FR 2873382 bezieht sich auf ein Verfahren zum gitterförmigen Auftragen eines Klebers mittels zweier Walzen auf ein Substrat.

Die bekannten Verfahren weisen jedoch den Nachteil auf, dass sich mit ihnen kein exakter Auftrag des Klebers ausschließlich und genau in vorgegebenen Regionen verwirklichen lässt, da es zu einem ungewollten Verteilen des Klebers auf dem Substrat während des Auftragens kommen kann. Vor allem bei bedruckten Folien ist dies von Nachteil, da hier oftmals eine genaue und exakte Abgrenzung von Kleber aufweisenden Zonen und bedruckten Zonen gewünscht ist. Darüber hinaus kann es während eines Verarbeitungsvorgangs des Substrates notwendig sein, dass die kleberführende Seite des Substrates Kontakt mit Führungsschienen oder ähnlichen Bestandteilen der Verarbeitungsmaschine hat. Ein nicht exakt oder vollflächig aufgetragener Kleber kann hier ein Verkleben verursachen und zu Maschinenausfällen führen.

Es ist daher eine Aufgabe der Erfindung, einen partiellen und in genau definierten Bereichen erfolgenden Kleberauftrag auf ein Substrat zu ermöglichen.

Diese Aufgabe wird mit einem Verfahren der eingangs genannten Art erfindungsgemäß dadurch gelöst, dass der Kleber mittels zumindest einer auf der Oberfläche des Druckformzylinders angebrachten Vertiefung aufgebracht wird, die in einem in Bezug auf die Drehrichtung des Druckformzylinders vorderen Abschnitt eine größere Tiefe aufweist als in einem hinterem Abschnitt.

Es ist ein Verdienst der Erfindung, einen exakten Kleberauftrag auf das Substrat zu ermöglichen, wobei die Oberfläche des Druckformzylinders entsprechend der Geometrie der Zonen, in welchen der Kleber aufgetragen werden soll, ausgebildet ist. Aufgrund des erfindungsgemäßen Kleberauftrages mit einem Tiefdruckverfahren im Gleichlaufprinzip wird auch eine sehr scharfe und präzise Abgrenzung des Kleberrandes zu einer kleberfreien Zone erzielt. Auch lässt sich mittels der Erfindung ein gleichmäßiger Kleberauftrag mit einer sehr scharfen und sauberen Kante zwischen Bereichen mit Kleber und ohne Kleber erzielen.

Die eingangs genannte Aufgabe lässt sich auch mit einem Verfahren zur Herstellung einer bandförmigen Kunststofffolie, welche zumindest ein Druckbild aufweist und mit einem Kleber versehen ist, erfindungsgemäß dadurch lösen, dass der Kleber nach dem erfindungsgemäßen Verfahren aufgetragen wird.

Gemäß einer vorteilhaften Variante der Erfindung wird als Kleber ein selbstklebender Kleber verwendet. Diese Ausführungsform ist vor allem für Anwendungen von Vorteil, in welchen die Folie erst zu einem späteren Zeitpunkt auf einen Gegenstand aufgeklebt werden soll.

Eine exakte Ausrichtung des Klebers und des Druckbilds wird dadurch erleichtert, dass das Druckbild vor dem Auftragen des Klebers auf die Folie aufgebracht wird.

Um die exakte Ausrichtung des Kleberauftrags zu überprüfen, kann zumindest eine Position des aufgetragenen Klebers auf dem Substrat optisch erfasst werden.

Gemäß einer vorteilhaften Variante der Erfindung wird als Folie eine transparente Folie verwendet. Diese Ausführungsform der Erfindung ist vor allem dann von Vorteil, wenn der Kleber und das Druckbild auf derselben Seite der Folie aufgetragen werden. Das Druckbild kann dann in einem aufgeklebten Zustand durch die transparente Folie hindurch wahrgenommen werden und ist auch gegen Verschmutzungen geschützt.

Um ein Verblocken der Folie bei einem Aufrollen zu verhindern, kann auf eine dem Kleber gegenüberliegende Seite der Folie zumindest eine Antihaftbeschichtung, insbesondere eine Silikonbeschichtung aufgebracht werden.

Eine bevorzugte Variante der Erfindung sieht vor, dass mit dem erfindungsgemäßen Verfahren eine Banderole für eine Zigarettenverpackung hergestellt wird. Diese Ausführungsform der Erfindung hat den Vorteil, dass hiermit sehr viele Schwierigkeiten, die mit der Herstellung von Banderolen für Zigarettenverpackungen verbunden sind, insbesondere eine exakte Aufbringung des Klebers in Ausrichtung zum dem Aufdruck der Banderole, gelöst werden können.

Die oben genannte Aufgabe lässt sich auch mit einer Vorrichtung der eingangs genannten Art lösen, wobei erfindungsgemäß der Druckformzylinder an seiner Oberfläche zum Auftragen des Klebers auf das Substrat zumindest eine Vertiefung aufweist, die in einem in Bezug auf die Drehrichtung des Druckformzylinders vorderen Abschnitt eine größere Tiefe aufweist als in einem hinterem Abschnitt.

Darüber hinaus kann die Vorrichtung zumindest ein optisches Messmittel zur Erfassung zumindest einer Position des aufgetragenen Klebers auf dem Substrat aufweisen.

Die Erfindung samt weiteren Vorteilen wird im Folgenden anhand einiger nicht einschränkender Ausführungsbeispiele näher erläutert, welche in den Zeichnungen dargestellt sind. In diesen zeigen schematisch:
- Fig. 1: eine erfindungsgemäße Vorrichtung;
- Fig. 2: eine Draufsicht auf einen Druckformzylinder der Vorrichtung aus Fig. 1;
- Fig. 3: eine Draufsicht auf eine mit der Vorrichtung aus Fig.1 hergestellte Folie und
- Fig. 4: eine perspektivische Ansicht des Druckformzylinders aus Fig. 2.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

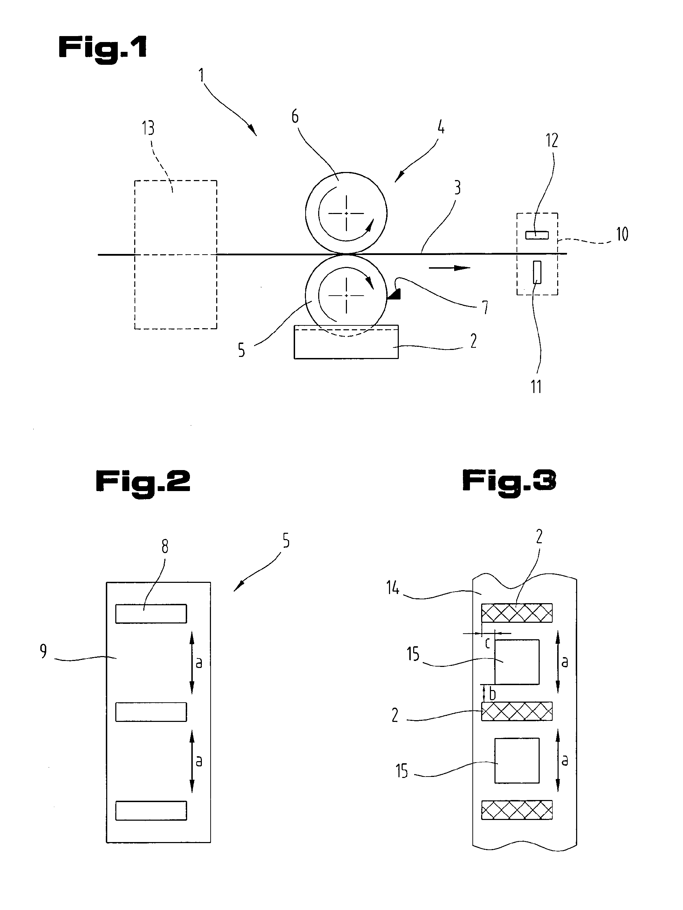

Gemäß Fig. 1 weist eine erfindungsgemäße Vorrichtung 1 zum Auftragen eines Klebers 2 auf ein Substrat 3 eine Tiefdruckvorrichtung 4 auf. Die Tiefdruckvorrichtung 4 umfasst einen Druckformzylinder 5 und einen Presseur 6.

Das Substrat 3 ist von flächiger, bandförmiger Struktur und bevorzugterweise eine Kunststofffolie, die farblos transparent aber auch mit Farbpigmenten versetzt sein kann. Jedoch kann das Substrat 3 auch aus jedem anderen Material sein.

Der Druckformzylinder 5 und der Presseur 6 sind erfindungsgemäß als in einer Transportrichtung des Substrates 3 mitdrehend angetriebene Walzen ausgebildet. Die Transportrichtung des Substrates 3 ist in Fig. 1 mit einem Pfeil angegeben und erfolgt in der Darstellung von links nach rechts.

Bei dem erfindungsgemäßen Verfahren wird nun der Kleber 2 mittels des Druckformzylinders 5 und des Presseurs 6 aufgetragen. Zur Aufnahme des Klebers 2 kann der Druckformzylinder 5 beispielsweise in einen Behälter mit dem Kleber 2 eintauchen. In der Oberfläche des Druckformzylinders 5 sind Vertiefungen, "Näpfchen", angebracht, welche zur Aufnahme des Klebers 2 vorgesehen sind. Abschnitte, welche keinen Kleber 2 aufnehmen sollen, sind im Verhältnis zu den Näpfchen auf einem konstanten höheren Niveau. Überschüssiger Kleber 2 kann beispielsweise mit einer Rakel 7 von der Oberfläche des Druckformzylinders 5 abgestrichen werden, sodass sich der Kleber 2 nur in den Näpfchen befindet.

In Fig. 2 ist ein Oberflächenabschnitt des Druckformzylinders 5 gezeigt. Die Oberfläche des Druckformzylinders 5 ist entsprechend der gewünschten Form und Lage der Auftragsflächen des Klebers 2 auf dem Substrat 3 ausgebildet. In der vorliegenden Darstellung sind die Vertiefungen bzw. "Näpfchen" mit dem Bezugszeichen 8 bezeichnet. Die Oberflächenabschnitte 9, die keinen Kleber 2 aufnehmen, liegen bevorzugterweise auf dem gleichen Niveau und sind gegenüber den Näpfchen 8 erhöht. Die Näpfchen 8 sind in einem Abstand a voneinander auf der Oberfläche des Druckkopfzylinders 5 angeordnet. An dieser Stelle sei jedoch erwähnt, dass die Näpfchen 8 in jeder gewünschten Anordnung auf der Oberfläche des Druckkopfzylinders 5 angeordnet sein können.

Durch den von dem Presseur 6 ausgeübten Anpressdruck erfolgt eine Übertragung des Klebers 2 von dem Druckkopfzylinder 5 auf das Substrat 3. Presseur 6 und Druckformzylinder 5 werden erfindungsgemäß im Gleichlaufprinzip betrieben. Entsprechend diesem Prinzip drehen sich der Presseur 6 und die Druckwalze 5 in Transportrichtung des Substrates 3. Die Relativbewegungen von Presseur 6 und Druckformzylinder 5 entsprechen hierbei den Bewegungen zweier ineinander greifender Zahnräder. Durch die erfindungsgemäße Anordnung lässt sich das Abbild der Oberfläche des Druckformzylinders 5 exakt auf das Substrat 3 übertragen.

Die erfindungsgemäße Vorrichtung 1 kann auch zur Herstellung einer in Fig. 3 dargestellten Kunststofffolie 14 verwendet werden, welche Druckbilder 15 aufweist und mit dem Kleber 2 versehen wird.

Die Kunststofffolie 14 kann beispielsweise eine MOPP, BOPP, PET, PVC, OPS, PE, PLA Folie sein. Auch coextrudierte, laminierte oder anderweitig veredelte Folien können verwendet werden. Das Folienmaterial kann sowohl transparent, als auch mit Farbpigmenten versetzt sein. Die Oberfläche der Kunststofffolie 14 kann glatt sein oder eine spezielle Struktur aufweisen, um beispielsweise haptische Effekte zu erzielen. Weiters kann die Bedruckbarkeit durch Einsatz chemischer oder mechanischer Verfahren optimiert sein.

Die Verwendung einer transparenten Kunststofffolie 14 ist vor allem zur Herstellung von Banderolen für Zigarettenverpackungen von Vorteil, da bei Zigarettenverpackungen, bei welchen an ihrem oberen Packungsrand Gesundheitswarnungen aufgedruckt sind, diese Warnungen trotz der Anbringung einer Banderole lesbar sein müssen. Darüber hinaus werden aus einem weichen Material hergestellte Zigarettenverpackungen oftmals an ihrem oberen Packungsrand durch die Banderole zusammengehalten, sodass ein Anbringen der Banderole im Bereich der aufgedruckten Gesundheitswarnung unumgänglich sein kann. Durch die Verwendung einer transparenten Kunststofffolie 14 kann gewährleistet werden, dass trotz Anbringung der Banderole eine auf der Zigarettenpackung aufgedruckte Gesundheitswarnung gelesen werden kann.

Das Druckbild 15, welches eine Banderole darstellen kann, kann mittels einer in Fig. 1 mit dem Bezugszeichen 13 versehenen Druckvorrichtung auf die Kunststofffolie 14 aufgebracht werden. Hierbei können unterschiedlicher Druckverfahren zum Einsatz kommen, beispielsweise Tief-, Flexo, Digital- oder Rollenoffset-Verfahren.

Bevorzugterweise wird das Druckbild 15 auf die gleiche Seite der Kunststofffolie 14 aufgebracht, auf der auch der Auftrag des Klebers 2 erfolgt. Auf der Rückseite, also auf der dem Kleber 2 und dem Druckbild 15 abgewandten Seite kann die Kunststofffolie 14 eine Antihaftbeschichtung, beispielsweise in Form einer Silikonbeschichtung aufweisen. Hierdurch lässt sich bei einem Aufrollen der bedruckten und mit dem Kleber 2 versehenen Kunststofffolie 14 ein Verblocken der Folie verhindern. Die Antihaftbeschichtung (Silikonbeschichtung) kann bei Zigarettenverpackungen gleichzeitig auch als Schicht fungieren, die eine Versiegelung einer als Umverpackung für die Zigarettenpackung dienenden Verpackungsfolie mit der Banderole bzw. der Kunststofffolie 14 verhindert.

Der Auftrag der Silikonbeschichtung auf die Kunststofffolie 14 erfolgt günstigerweise vor dem Aufbringen des Druckbildes 15 und des Klebers 2.

Wie weiters in Fig. 1 dargestellt kann die Vorrichtung 1 mindest eine optische Messvorrichtung 10 zur Erfassung von Positionen des aufgetragenen Klebers 2 auf dem Substrat 3 bzw. der Kunststofffolie 14 aufweisen. Die Messvorrichtung 10 kann beispielsweise eine Lichtquelle 11 und einen entsprechenden Sensor 12 umfassen. Die Lichtquelle 11 kann beispielsweise Licht im sichtbaren, UV- oder Infrarotbereich emittieren. Die Lichtquelle 11 kann auch als Laser ausgebildet sein. Mit dem Sensor 12 kann beispielsweise die Intensität des durch die Kunststofffolie 14 bzw. das Substrat 3 dringenden, von der Lichtquelle 11 emittierten Lichtes gemessen werden und anhand von Intensitätsschwankungen auf die Positionen des Klebers 2 auf der Kunststofffolie 14 bzw. dem Substrat 3 geschlossen werden. Natürlich ist auch jede andere Art der optischen Erfassung der Position des Klebers 2 möglich. So könnten beispielsweise dem Kleber auch UV-aktive Farbpigmente beigemengt werden, welche mit UV-Licht angeregt werden können, wobei die Positionserfassung durch Erfassen des von dem Kleber 2 abgestrahlten UV-Lichtes erfolgen kann. Die oben angeführten Messmethoden sind lediglich beispielhafter Natur. An dieser Stelle sei nochmals darauf hingewiesen, dass beliebige andere optische Messverfahren zur Überprüfung des Kleberauftrags zum Einsatz kommen können.

Anhand der gemessenen Position des Klebers 2 kann festgestellt werden, ob diese mit einer Sollposition übereinstimmt.

Die Sollposition des Klebers 2 auf der Kunststofffolie 14 kann gemäß Fig. 3 beispielsweise durch die Abstände b und c zwischen dem aufgetragenen Kleber 2 und dem Druckbild 15, definiert werden. Kommt es beispielsweise zu einer Änderung des bekannten Längsabstandes b so liegt eine Abweichung des aufgetragenen Klebers 2 von der Sollposition vor, die korrigiert werden kann. Dies kann beispielsweise durch Verlängerung oder Verkürzung der Lauflänge zwischen der Druckvorrichtung 13 und der Tiefdruckvorrichtung 4 für den Kleberauftrag geschehen, sodass auf diese Weise eine Positionskorrektur des Kleberauftrages vorgenommen werden kann.

Eine Abweichung des seitlichen Abstands c zwischen dem Kleberauftrag 2 und dem Druckbild 15 kann zum Beispiel über eine seitliche Positionsveränderung des Druckzylinders 5 oder über einen vor dem Tiefdruckvorrichtung 4 vorgeschalteten Drehrahmen korrigiert werden.

Der Kleber 2 ist bevorzugterweise ein selbstklebender Kleber. Durch eine selbstklebende Ausführung des Klebers kann zudem ein ungewolltes Verrutschen der Kunststofffolie bei einem Aufbringen auf einen Gegenstand verhindert werden. Dies ist insbesondere bei der Herstellung von Banderolen für Zigarettenverpackungen von Bedeutung. Bei einem Aufbringen der selbstklebenden transparenten Kunststofffolie 14 mit der aufgedruckten Banderole auf die Zigarettenverpackung kann nämlich verhindert werden, dass die Banderole verrutscht, wie es bei einem Auftragen eines feuchten Klebers unmittelbar nach dem Aufbringen der Banderole der Fall sein kann.

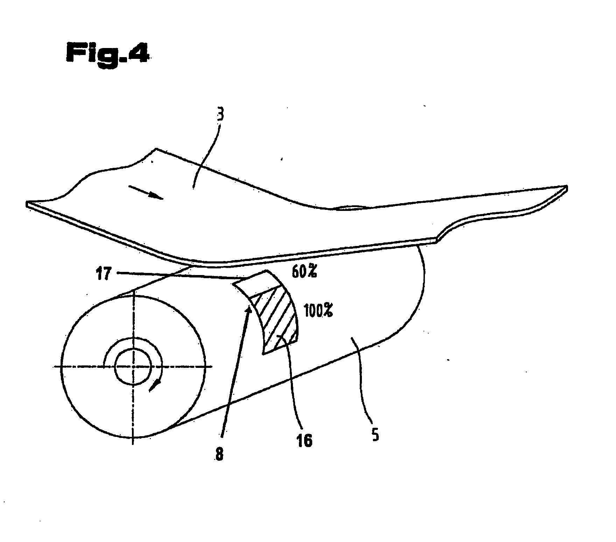

Wie in Fig. 4 dargestellt, kann die Vertiefung 8, in einem in Bezug auf die Drehrichtung des Druckformzylinders 5 vorderen, von einer Vorderkante der Vertiefung 8 begrenzten Abschnitt 16 eine größere Tiefe aufweisen als in einem hinteren, von einer Hinterkante der Vertiefung 8 begrenzten Abschnitt 17. Durch diese Ausbildung der Vertiefung lässt sich eine sehr genaue und scharfkantige Abgrenzung von Bereichen mit Kleber und Bereichen ohne Kleber erzielen. Der vordere Abschnitt 16 der Vertiefung 8 beginnt an der Vorderkante der Vertiefung 8 und endet Anfang des hinteren Abschnitts 17. Der hintere Abschnitt 17 reicht bis zu der Hinterkante der Vertiefung 8. Der vordere Abschnitt 16 kann über seine gesamte Länge und/oder Breite eine gleichbleibende, also konstante, Tiefe aufweisen. Auch der hintere Abschnitt 17 kann über seine gesamte Länge und/oder Breite eine gleichbleibende, also konstante, Tiefe aufweisen. Unter "Länge der Vertiefung" wird die Längserstreckung der Vertiefung in Drehrichtung des Druckformzylinders 5 verstanden. Unter "Breite der Vertiefung" ihre normal zur Längserstreckung der Vertiefung verlaufende Breite. Gemäß der dargestellten Ausführungsform kann die Vertiefung die Umrissform eines Rechtecks haben, wobei natürlich je nach gewünschter Form des Kleberauftrags auch andere Umrissformen, beispielswiese trapezförmig, rautenförmig, ellipsenförmig, etc. zum Einsatz kommen können. Weiters kann der Übergang zwischen vorderem und hinterem Abschnitt als Stufe ausgebildet sein. Gemäß einer weiteren Ausführungsform der Erfindung kann zwischen dem vorderen Abschnitt 16 und dem hinteren Abschnitt 17 die Tiefe der Vertiefung auch kontinuierlich abnehmen. Bei allen Ausführungsformen der Vertiefung 8 ist es jedoch vorteilhaft, wenn die Vertiefung 8 in dem Bereich um ihre in Drehrichtung betrachtet liegende Vorderkante bzw. in einem unmittelbar an diese Vorderkante anschließenden Bereich eine größere Tiefe aufweist als in dem Bereich um ihre in Drehrichtung betrachtet liegende Hinterkante bzw. in einem unmittelbar an diese Hinterkante anschließenden Bereich. Unter Tiefe der Vertiefung 8 wird hierbei der Abstand zwischen dem Boden und einer Oberkante der Vertiefung 8 verstanden. Erst durch die spezielle Ausbildung der Vertiefung 8 mit einer größeren Tiefe in ihrem vorderen Abschnitt 16 als in ihrem hinteren Abschnitt 17 lässt sich ein optimaler und scharfkantiger Klebestoffauftrag ohne ein Zerrinnen des aufgetragenen Klebers bewirken.

Beispielsweise kann der hintere Abschnitt 17 gemäß einem nicht einschränkenden Ausführungsbeispiels eine um 40% geringere Tiefe als der vordere Abschnitt 16 aufweisen. Selbstverständlich sind auch andere Verhältnisse der Tiefen des vorderen Abschnitts 16 und des hinteren Abschnitts 17 möglich. In erster Linie hängt die Wahl des Verhältnisses der Tiefen bzw. Volumina der Abschnitte 16 und 17 von der Menge des aufzutragenden Klebers 2 sowie von dessen Klebekraft ab.

### Bezugszeichenaufstellung

- 1: Vorrichtung zum Auftragen eines Klebers
- 2: Kleber
- 3: Substrat
- 4: Tiefdruckvorrichtung
- 5: Druckformzylinder

- 6: Presseur
- 7: Rakel
- 8: Näpfchen
- 9: Oberflächenabschnitte des Druckformzylinder, die keinen Kleber aufnehmen
- 10: optische Messvorrichtung

- 11: Lichtquelle
- 12: Sensor
- 13: Druckvorrichtung
- 14: Kunststofffolie
- 15: Druckbild

- 16: vorderer Abschnitt der Vertiefung des Druckformzylinders
- 17: hinterer Abschnitt der Vertiefung des Druckformzylinders

## Patentansprüche

1. Verfahren zum Auftragen eines Klebers (2) auf einem Substrat (3) mittels eines Tiefdruckverfahrens, wobei der Kleber (2) unter Verwendung zweier rotierender Walzen, von welchen eine als Druckformzylinder (5) und eine als Presseur (6) ausgebildet ist, nur in vordefinierten Bereichen auf das Substrat (3) aufgetragen wird, wobei sich der Druckformzylinder (5) und der Presseur (6) in einer Transportrichtung des Substrates (3) mitdrehen, **dadurch gekennzeichnet, dass** der Kleber (2) mittels zumindest einer auf der Oberfläche des Druckformzylinders (5) angebrachten Vertiefung (8) aufgebracht wird, die in einem in Bezug auf die Drehrichtung des Druckformzylinders (5) vorderen Abschnitt (16) eine größere Tiefe aufweist als in einem hinteren Abschnitt (17).

2. Verfahren zur Herstellung einer bandförmigen Kunststofffolie (14), welche zumindest ein Druckbild (15) aufweist und mit einem Kleber (2) versehen ist, **dadurch gekennzeichnet, dass** zum Auftragen des Klebers (2) ein Verfahren nach Anspruch 1 verwendet wird.

3. Verfahren nach Anspruch 2, **dadurch gekennzeichnet, dass** als Kleber (2) ein selbstklebender Kleber verwendet wird.

4. Verfahren nach einem der Ansprüche 2 oder 3, **dadurch gekennzeichnet, dass** zumindest eine Position des aufgetragenen Klebers (2) auf der Kunststofffolie (14) optisch erfasst wird.

5. Verfahren nach einem der Ansprüche 2 bis 4, **dadurch gekennzeichnet, dass** das Druckbild (15) vor dem Auftragen des Klebers (2) auf die Kunststofffolie (14) aufgebracht wird.

6. Verfahren nach einem der Ansprüche 2 bis 5, **dadurch gekennzeichnet, dass** eine transparente Kunststofffolie (14) verwendet wird.

7. Verfahren nach einem der Ansprüche 2 bis 6, **dadurch gekennzeichnet, dass** auf eine dem Kleber (2) gegenüberliegende Seite der Kunststofffolie (14) zumindest eine Antihaftbeschichtung, insbesondere eine Silikonbeschichtung, aufgebracht wird.

8. Verfahren nach einem der Ansprüche 2 bis 7, **dadurch gekennzeichnet, dass** damit eine Banderole für eine Zigarettenverpackung hergestellt wird.

9. Vorrichtung (1) zum Auftragen eines Klebers (2) auf ein Substrat (3) mittels eines Tiefdruckverfahrens, wobei die Vorrichtung (1) einen Druckformzylinder (5) und einen Presseur (6) aufweist, wobei der Druckformzylinder (5) und der Presseur (6) als in einer Transportrichtung des Substrates (3) mitdrehend angetriebene Walzen ausgebildet sind, **dadurch gekennzeichnet, dass** der Druckformzylinder (5) an seiner Oberfläche zum Auftragen des Klebers (2) auf das Substrat (3) zumindest eine Vertiefung (8) aufweist, die in einem in Bezug auf die Drehrichtung des Druckformzylinders (5) vorderen Abschnitt (16) eine größere Tiefe aufweist als in einem hinterem Abschnitt (17).

10. Vorrichtung nach Anspruch 9, **dadurch gekennzeichnet, dass** die Vorrichtung (1) zumindest eine optische Messvorrichtung (10) zur Erfassung der zumindest einer Position des aufgetragenen Klebers (2) auf dem Substrat (3) aufweist.

## Claims

1. Method for applying an adhesive (2) to a substrate (3) by means of an intaglio printing method, the adhesive (2) being applied to the substrate (3) only in predefined areas using two rotating rollers, of which one is in the form of a printing cylinder (5) and one is in the form of an impression roller (6), in which the printing cylinder (5) and the impression roller (6) rotate together in a transport direction of the substrate (3), **characterized in that** the adhesive (2) is applied by means of at least one recess (8) formed on the surface of the printing cylinder (5), the at least one recess in a front section (16) in relation to the rotational direction of the printing cylinder (5) having a greater depth than a rear section (17).

2. Method for producing a band-shaped plastic film (14), which comprises at least one printed image (15) and is provided with an adhesive (2), **characterized in that** a method as claimed in claim 1 is used for applying the adhesive (2).

3. Method according to claim 2, **characterized in that** a self-adhering adhesive is used as the adhesive (2).

4. Method according to one of claims 2 or 3, **characterized in that** at least one position of the applied adhesive (2) is determined optically on the plastic film (14).

5. Method according to one of claims 2 to 4, **characterized in that** the printed image (15) is applied to the plastic film (14) prior to the application of the adhesive (2).

6. Method according to one of claims 2 to 5, **characterized in that** a transparent plastic film (14) is used.

7. Method according to one of claims 2 to 6, **characterized in that** onto a side of the plastic film (14) opposite the adhesive (2) at least one non-stick coating is applied, in particular a silicon coating.

8. Method according to one of claims 2 to 7, **characterized in that** a sleeve is produced thereby for cigarette packaging.

9. Device (1) for applying adhesive (2) to a substrate (3) by means of an intaglio printing method, the device (1) comprising a printing cylinder (5) and an impression roller (6), the printing cylinder (5) and the impression roller (6) being configured as rollers driven to rotate together in a transport direction of the substrate (3), **characterized in that** the printing cylinder (5) comprises at least one recess (8) on its surface for applying the adhesive (2) to the substrate (3), which recess in a front section (16) in relation to the rotational direction of the printing cylinder (5) has a greater depth than a rear section (17).

10. Device according to claim 9, **characterized in that** the device (1) comprises at least one optical measuring device (10) for detecting the at least one position of the applied adhesive (2) on the substrate (3).

## Revendications

1. Procédé d'application d'un adhésif (2) sur un substrat (3) au moyen d'un procédé d'impression en creux, dans lequel l'adhésif (2) n'est appliqué, en utilisant deux cylindres rotatifs, dont l'un est réalisé comme cylindre imprimant (5) et l'un comme cylindre presseur (6), que dans des zones prédéfinies sur le substrat (3), étant entendu que le cylindre imprimant (5) et le cylindre presseur (6) tournent ensemble dans une direction de transport du substrat (3), **caractérisé en ce que** l'adhésif (2) est appliqué au moyen d'au moins un enfoncement (8) pratiqué sur la surface du cylindre imprimant (5) qui présente une plus grande profondeur dans une section (16) située à l'avant par référence à la direction de rotation du cylindre imprimant (5) que dans une section (17) située à l'arrière.

2. Procédé de fabrication d'une feuille de plastique en forme de bande (14) qui présente au moins une image imprimée (15) et qui est pourvue d'un adhésif (2), **caractérisé en ce qu'**un procédé selon la revendication 1 est utilisé pour appliquer l'adhésif (2).

3. Procédé selon la revendication 2, **caractérisé en ce qu'**un adhésif autocollant est utilisé comme adhésif (2).

4. Procédé selon l'une des revendications 2 ou 3, **caractérisé en ce qu'**au moins une position de l'adhésif (2) appliqué sur la feuille de plastique (14) est déterminée de façon optique.

5. Procédé selon l'une des revendications 2 à 4, **caractérisé en ce que** l'image imprimée (15) est apposée avant l'application de l'adhésif (2) sur la feuille de plastique (14).

6. Procédé selon l'une des revendications 2 à 5, **caractérisé en ce qu'**une feuille de plastique transparente (14) est utilisée.

7. Procédé selon l'une des revendications 2 à 6, **caractérisée en ce qu'**au moins un revêtement antiadhésif, en particulier un revêtement en silicone, est appliqué sur le côté de la feuille de plastique (14) opposé à l'adhésif (2).

8. Procédé selon l'une des revendications 2 à 7, **caractérisé en ce qu'**une bandelette pour un paquet de cigarettes est fabriquée selon ce procédé.

9. Dispositif (1) d'application d'un adhésif (2) sur un substrat (3) au moyen d'un procédé d'impression en creux, dans lequel le dispositif (1) présente un cylindre imprimant (5) et un cylindre presseur (6), étant entendu que le cylindre imprimant (5) et le cylindre presseur (6) sont réalisés comme cylindres entraînés tournant ensemble dans une direction de transport du substrat (3), **caractérisé en ce que** le cylindre imprimant présente, sur sa surface destinée à l'application de l'adhésif (2) sur le substrat (3), au moins un enfoncement (8) qui présente une plus grande profondeur dans une section (16) située à l'avant par référence à la direction de rotation du cylindre imprimant (5) que dans une section (17) située à l'arrière.

10. Dispositif selon la revendication 9, **caractérisé en ce que** le dispositif (1) présente au moins un dispositif de mesure optique (10) destiné à déterminer l'au moins une position de l'adhésif (2) appliqué sur le substrat (3).
